# EUROPÄISCHE PATENTSCHRIFT

(11) **EP 0 914 360 B1**
(45) Veröffentlichungstag und Bekanntmachung des Hinweises auf die Patenterteilung: **30.01.2002**
(21) Anmeldenummer: 97938859.2
(22) Anmeldetag: 24.07.1997
(51) Int. Cl.: C08F 283/12, G02B 1/04, C08L 51/08

(54) **VERFAHREN ZUR HERSTELLUNG EINES FÜR OPTISCHE ZWECKE GEEIGNETEN FORMKÖRPERS**
METHOD FOR PRODUCING A SHAPED PIECE SUITABLE FOR OPTICAL PURPOSES
PROCEDE DE PRODUCTION D'UNE PIECE MOULEE ADAPTEE A DES FINS OPTIQUES

(30) Priorität: 25.07.1996 DE 19630100
(43) Veröffentlichungstag der Anmeldung: 12.05.1999
(73) Patentinhaber: Institut Für Neue Materialien gem. GmbH, 66123 Saarbrücken (DE)
(72) Erfinder: BRAUNE, Bert, D-66333 Völklingen (DE); GEITER, Elisabeth, D-66117 Saarbrücken (DE); KRUG, Herbert, D-66346 Püttlingen (DE); MÜLLER, Peter, D-66557 Illingen (DE); SCHMIDT, Helmut, D-66130 Saarbrücken (DE)
(74) Vertreter: Barz, Peter, Dr.
(86) Internationale Anmeldenummer: EP9704020
(87) Internationale Veröffentlichungsnummer: WO9804604

(56) Entgegenhaltungen:
- EP-A- 0 402 466
- GB-A- 2 111 241
- GB-A- 2 129 005
- GB-A- 2 167 341
- US-A- 4 455 205

## Beschreibung

Die vorliegende Erfindung betrifft ein Verfahren zur Herstellung eines für optische Zwecke geeigneten Formkörpers, z.B. eines Formkörpers, der, gegebenenfalls nach geeigneter Be- und/oder Verarbeitung (wie z.B. Sägen, Fräsen, Schleifen, Polieren usw.) als solcher (d.h. ohne weitere Beschichtung usw.) als Linse für eine Brille, Kamera und dgl. eingesetzt werden kann.

Formkörper, die für optische Zwecke eingesetzt werden sollen, müssen eine Reihe von höchst unterschiedlichen Anforderungen erfüllen. So sollen sie z.B. transparent, kratz- und abriebfest, mechanisch fest, spannungsfrei und auch gegenüber hoch-energetischem Licht beständig sein und eine einstellbare (z.B. hohe) Brechzahl aufweisen. Darüber hinaus sollen sie homogen sein und vorzugsweise aus leicht zugänglichen (billigen) Ausgangsmaterialien in einfacher Weise hergestellt werden können. Da es jedoch schwierig ist, Materialien, die allen diesen Anforderungen gerecht werden, bereitzustellen, behilft man sich in der Regel dadurch, daß man das Fehlen oder die geringe Ausprägung der einen oder anderen Eigenschaft gezwungenermaßen in Kauf nimmt oder durch zusätzliche Verfahrensschritte kompensiert. So werden z.B. für optische Zwecke einzusetzende Materialien mit zu geringer Kratz- und Abriebfestigkeit häufig mit einem Überzug versehen, der dieses Defizit des Materials ausgleicht. Dies ist jedoch aus wirtschaftlicher Sicht (zusätzlicher Zeit-und Kostenaufwand) nicht wünschenswert.

Die DE-A-32 44 877 betrifft ein siliconhaltiges Kontaktlinsenmaterial und daraus hergestellte Kontaktlinsen. Bei dem Kontaktlinsenmaterial handelt es sich um Oligomere bzw. Polymere mit definierter Struktur und Zusammensetzung, die z.B. durch Kondensation eines hydrolysierbaren Silans mit radikalisch polymerisierbarer Gruppierung (z.B. von γ-Methacryloxypropyltrimethoxysilan) mit anderen hydrolysierbaren Silanen hergestellt werden und über mindestens zwei radikalisch polymerisierbare Gruppierungen verfügen, jedoch keine zur weiteren hydrolytischen Kondensation befähigten Gruppen (z.B. an Silicium gebundene Alkoxygruppen) mehr aufweisen (und somit zu keiner anorganischen Vernetzung durch Ausbildung von z.B. -O-Si-O-Bindungen mehr fähig sind). Aus diesen als Organoylsiloxane bezeichneten Materialien werden durch Zusatz eines Radikalstarters und thermische Polymerisation der vorhandenen radikalisch polymerisierbaren Gruppierungen (vorzugsweise harte) Kontaktlinsen hergestellt. Gegebenenfalls können bei dieser Polymerisation auch ungesättigte Monomere wie z.B. Methylmethacrylat und Methacrylsäure anwesend sein. Gemäß Beispiel 5 dieser Druckschrift werden zur Herstellung eines Formkörpers, der zu Kontaktlinsen-Rohlingen weiterverarbeitet werden kann, 7 Tage benötigt. Dennoch lassen sich auf diesem Weg z.B. keine hohen Brechwerte erzielen. Als vorteilhafte Eigenschaften der erhaltenen Formkörper werden vielmehr gute Stoßfestigkeit, verminderte Sprödigkeit und zufriedenstellende Sauerstoffdurchlässigkeit genannt.

Die EP-A-78548 beschreibt Kieselsäureheteropolykondensate und deren Verwendung für optische Linsen, insbesondere Kontaktlinsen. Diese Heteropolykondensate sind dadurch erhältlich, daß man (a) mindestens eine im Reaktionsmedium lösliche, vollständig hydrolysierbare Titan- oder Zirkonverbindung und (b) mindestens ein bestimmtes organofunktionelles Silan sowie (c) bestimmte fakultative Komponenten in Abwesenheit von Wasser und gegebenenfalls in Anwesenheit eines wasserfreien Lösungsmittels vorkondensiert und anschließend durch Zugabe von Wasser weiterkondensiert, wobei bezogen auf die Gesamtmolzahl der Ausgangskomponenten 1 bis 60 Molprozent Komponente (a) und 20 bis 99 Molprozent Komponente (b) verwendet werden. Konkrete Beispiele für die Verbindungen der Komponente (a) sind Titan- und Zirkontetraalkoxide, während spezielle Beispiele für organofunktionelle Silane (b) 3-Glycidoxypropyltrialkoxysilane und 3-Methacryloyloxypropyltrialkoxysilane sind. Die wie beschrieben hergestellten Heteropolykondensate werden zur Herstellung von Formkörpern einer thermischen Aushärtung durch Kondensation der restlichen noch vorhandenen kondensationsfähigen Gruppen unterzogen. Gemäß einer speziellen Ausführungsform können Heteropolykondensate, die über radikalisch polymerisierbare Gruppierungen verfügen, auch in Gegenwart eines Radikalbildners z.B. mit sich selbst oder mindestens einem einfach ungesättigten copolymerisierbaren Monomer (vorzugsweise mit hydrophilem Charakter) polymerisiert werden. Es wird auch angegeben, daß diese (Co)polymerisation gegebenenfalls in Gegenwart einer mehrfach ungesättigten Verbindung (z.B. eines (Meth)acrylsäureesters eines Alkylenglykols) als Vernetzungsmittel durchgeführt werden kann, wobei die Menge des Vernetzungsmittels vorzugsweise 0,1 bis 10 Molprozent, insbesondere 0,1 bis 5 Molprozent, bezogen auf die Gesamtmolzahl des Copolymerisats, beträgt. Als besondere Vorteile der so erhältlichen Formkörper werden hohe Sauerstoffpermeabilität und zufriedenstellendes hydrophiles Verhalten (gute Benetzbarkeit) genannt. Den Formkörpern werden auch hohe mechanische und Formstabilität, gute Elastizität und hohe Oberflächenhärte zugeschrieben; diese Eigenschaften sind jedoch experimentell nicht belegt.

Somit besteht noch immer ein Bedarf an einem für optische Zwecke einsetzbaren Material, das als solches die eingangs genannten (und andere) für optische Materialien wünschenswerten bzw. erforderlichen Eigenschaften in hohem Maße zeigt.

EP-A-399148 beschreibt ein Verfahren zur Herstellung von Polykondensationspulvern auf Metalloxid-Basis. Diese Pulver werden durch Cohydrolyse einer Silan-Verbindung mit einer oder mehreren Alkoxygruppen und einer polymerisierbaren ungesättigten Bindung mit einem Metallalkoxid in einem wäßrigen Medium hergestellt.

EP-A-402466 offenbart ein Verfahren zur Herstellung von Methacryl-Form-körpern, bei dem ein Reaktionsprodukt, das durch Polymerisation eines Alkoxysilan-Hydrolysats mit (Meth)acryloxygruppen und einem Silica-Gel erhalten wird, mit einem Formmaterial, das aus einem teilweise vemetzten Gelpolymer vom (Meth)acryl-Typ besteht, umgesetzt wird.

EP-A-549228 beschreibt eine lichthärtbare Harz-Zusammensetzung als Beschichtungsmaterial, die u.a. eine polymerisierbare Verbindung mit mindestens einer ethylenisch ungesättigten Gruppe sowie ein Silan-Monomer oder ein Hydrolyseprodukt eines Silan-Monomers mit polymerisierbaren Gruppen enthält.

Aufgabe der vorliegenden Erfindung ist die Bereitstellung eines für optische Zwecke geeigneten Formkörpers, der vorzugsweise aus leicht zugänglichen und somit kostengünstigen Ausgangsmaterialien hergestellt werden kann und möglichst alle der oben angegebenen Eigenschaften aufweist. Insbesondere soll der Formkörper inhärent kratzfest, mechanisch sehr fest und spannungsfrei sein, wobei die letztgenannte Eigenschaft die Herstellung von groß dimensionierten Formkörpern ermöglicht. Weiter soll der Brechwert des Formkörpers nach Belieben einstellbar (z.B. hoch) sein und selbstverständlich soll er eine ausgezeichnete Transparenz aufweisen.

Erfindungsgemäß wird die obige Aufgabe gelöst durch ein Verfahren zur Herstellung eines für optische Zwecke geeigneten Formkörpers, welches umfaßt die gemeinsame radikalische Polymerisation eines Vorkondensats (A), das abgeleitet ist von mindestens einem hydrolytisch kondensierbaren Silan (a) mit mindestens einer radikalisch polymerisierbaren Gruppierung X und eines Monomeren (B) mit mindestens zwei radikalisch polymerisierbaren Gruppierungen Y, wobei das Zahlenverhältnis Gruppierungen X : Gruppierungen Y nicht größer als 5:1 und nicht kleiner als 1:20 ist.
Gemäß einer bevorzugten Ausführungsform der vorliegenden Erfindung findet die obige radikalische Polymerisation des Vorkondensats (A) und des Monomeren (B) in Anwesenheit von nanoskaligen Teilchen (C) einer Metallverbindung, insbesondere eines Metalloxids, statt.

Im folgenden werden zunächst die Ausgangsmaterialien (A), (B) und (C) näher beschrieben.

Das Vorkondensat (A) ist von mindestens einem hydrolytisch kondensierbaren Silan (a) mit mindestens (und vorzugsweise) einer radikalisch polymerisierbaren Gruppierung X abgeleitet. Vorzugsweise weist das Silan (a) die allgemeine Formel (I) auf:

X-R^{**1**}-SiR^{**2**}_{**3**} (I)

worin X für CH_{**2**}=CR^{**3**}-COO oder CH_{**2**}=CH steht, R^{**3**} Wasserstoff oder Methyl darstellt, R^{**1**} ein zweiwertiger Kohlenwasserstoffrest mit 1 bis 20, vorzugsweise 1 bis 10 und insbesondere 1 bis 6 Kohlenstoffatomen ist, der gegebenenfalls eine oder mehrere Heteroatomgruppierungen (z.B. O, S, NH) enthält, die benachbarte Kohlenstoffatome voneinander trennen, und die Reste R², gleich oder verschieden voneinander, aus Alkoxy-, Aryloxy-, Acyloxy- und Alkylcarbonylgruppen sowie Halogenatomen (insbesondere F, Cl und/oder Br) ausgewählt sind.

Vorzugsweise sind die Gruppen R² identisch und ausgewählt aus Halogenatomen, C₁₋₄-Alkoxygruppen (z.B. Methoxy, Ethoxy, n-Propoxy, i-Propoxy und Butoxy), C₆₋₁₀-Aryloxygruppen (z.B. Phenoxy), C₁₋₄-Acyloxygruppen (z.B. Acetoxy und Propionyloxy) und C₂₋₁₀-Alkylcarbonylgruppen (z.B. Acetyl).

Die genannten Reste R² können gegebenenfalls Substituenten tragen, z.B. Halogen- und Alkoxygruppen, obwohl dies nicht bevorzugt ist.

Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Ethylen, Propylen, Butylen und Hexylen. Wenn X für CH₂=CH steht, steht R¹ vorzugsweise für Methylen und kann in diesem Fall auch eine bloße Bindung bedeuten.

Vorzugsweise stellt X CH₂=CR³-COO dar, wobei R³ bevorzugt CH₃ bedeutet.

Dementsprechend sind besonders bevorzugte Silane (a) (Meth)-acryloyloxyalkyltrialkoxysilane wie z.B. 3-Methacryloyloxypropyltrimethoxysilan.

Obwohl das Vorkondensat (A) zu 100% aus dem Silan (a) hergestellt werden kann, ist es auch möglich, bis zu 95 und insbesondere bis zu 90 Mol-% des bzw. der Silan(e) (a) durch andere hydrolytisch kondensierbare Verbindungen des Siliciums zu ersetzen. Bei den letztgenannten Verbindungen handelt es sich vorzugsweise um Silane (b) ohne Gruppierung X, die die allgemeine Formel (II) aufweisen:

R^{**4**}_{**a**}SiR^{**2**} _{**(4-a)**} (II)

worin
a 0, 1, 2 oder 3, vorzugsweise 1 oder 2, ist,
R² wie oben für Formel (I) definiert ist, und
die Reste R⁴, gleich oder verschieden voneinander, für Kohlenwasserstoffreste mit 1 bis 20, vorzugsweise 1 bis 10, und insbesondere 1 bis 6 Kohlenstoffatomen stehen, die eine oder mehrere Heteroatomgruppierungen (z.B. O, S, NH) enthalten können, die sich jeweils zwischen zwei benachbarten Kohlenstoffatomen befinden. Gegebenenfalls können die Reste R⁴ auch einen oder mehrere Substituenten tragen, insbesondere solche, die aus der Gruppe Halogen (insbesondere F, Cl und/oder Br), (C₁₋₄-)Alkoxy, OCOR⁵, COOR⁵, COR⁵, N(R⁵)₂ (R⁵ = Alkyl mit 1 bis 6 Kohlenstoffatomen oder Phenyl), NO₂, Epoxy und Hydroxy ausgewählt sind.

Bevorzugte Kohlenwasserstoffreste R⁴ sind (vorzugsweise unsubstituierte) Alkyl-, Aryl-, Alkaryl- und Aralkylreste, insbesondere C₁₋₄-Alkyl (z.B. Methyl und Ethyl) und Phenyl.

Wenn ein Silan (b) eingesetzt wird, ist das Molverhältnis Silan(e) (a) : Silan(e) (b) vorzugsweise größer als 1:5, insbesondere größer als 1:3 und besonders bevorzugt größer als 1:1.

Neben hydrolysierbaren Verbindungen des Siliciums kann das Vorkondensat (A) auch von hydrolysierbaren Verbindungen von von Silicium verschiedenen Elementen (wie beispielsweise Titan und Zirkonium) abgeleitet sein, wobei derartige Verbindungen vorzugsweise nicht mehr als 10 und insbesondere nicht mehr als 5 Mol-% aller zur Herstellung des Vorkondensats (A) eingesetzten hydrolysierbaren Ausgangsverbindungen (auf monomerer Basis) ausmachen. Besonders bevorzugt ist das Vorkondensat (A) ausschließlich von hydrolysierbaren Siliciumverbindungen (Z.B. den Silanen (a) und (b)) abgeleitet.

Die Herstellung des Vorkondensats (A) aus den hydrolysierbaren Ausgangsverbindungen erfolgt auf dem Fachmann bekannte Art und Weise, vorzugsweise in Gegenwart eines sauren oder basischen Kondensationskatalysators wie HCl, HNO₃ oder NH₃. Im übrigen wird die Herstellung des Vorkondensats (A) in den unten angegebenen Ausführungsbeispielen weiter veranschaulicht. In jedem Fall wird es bevorzugt, daß es sich bei dem Vorkondensat um eine nicht zu viskose Flüssigkeit handelt, die sich homogen mit dem Monomeren (B) mischen läßt und/oder sich (teilweise) darin löst.

Beim Monomer (B) handelt es sich vorzugsweise um eine oder mehrere Verbindungen der allgemeinen Formel (III)

(CH₂=CR³-COZ-)ₙ-A (III)

worin
n = 2, 3 oder 4, vorzugsweise 2 oder 3 und insbesondere 2;
Z = O oder NH, vorzugsweise O;
R³ = H, CH₃;
A = ein n-wertiger Kohlenwasserstoffrest mit 2 bis 30, insbesondere 2 bis 20 Kohlenstoffatomen, der eine oder mehrere Heteroatomgruppierungen aufweisen kann, die sich jeweils zwischen zwei benachbarten Kohlenstoffatomen befinden (Beispiele für derartige Heteroatomgruppierungen sind O, S, NH, NR (R = Kohlenwasserstoffrest), vorzugsweise O).

Weiter kann der Kohlenwasserstoffrest A einen oder mehrere Substituenten tragen, die vorzugsweise ausgewählt sind aus Halogen (insbesondere F, Cl und/oder Br), Alkoxy (insbesondere C₁₋₄-Alkoxy), Hydroxy, gegebenenfalls substituiertem Amino, NO₂, OCOR⁵, COOR⁵, COR⁵ (R⁵ = C₁₋₆-Alkyl oder Phenyl). Vorzugsweise ist der Rest A jedoch unsubstituiert oder mit Halogen und/oder Hydroxy substituiert.

In einer besonders bevorzugten Ausführungsform der vorliegenden Erfindung ist A von einem aliphatischen Diol, einem Alkylenglykol, einem Polyalkylenglykol oder einem gegebenenfalls alkoxylierten (z. B, ethoxylierten) Bisphenol (z.B. Bisphenol A) abgeleitet. In diesem Zusammenhang sind bevorzugte Alkylenglykole Ethylenglykol, Propylenglykol und Butylenglykol, insbesondere Ethylenglykol.

Neben den obigen Gruppierungen Y sind weitere erfindungsgemäß bevorzugte Gruppierungen Y Vinyl- und Allylgruppen. Selbstverständlich müssen die Gruppierungen Y nicht identisch sein. So ist z.B. Allyl(meth)acrylat eine erfindungsgemäß geeignete Verbindung. Andere Beispiele für für die Zwecke der vorliegenden Erfindung bevorzugte Monomere (B) sind Divinylbenzol und Diallylphthalat.

Erfindungsgemäß bevorzugt wird es, wenn die Gruppierungen X im Vorkondensat (A) und die Gruppierungen Y im Monomer (B) identische Gruppierungen sind.

Das obige Zahlenverhältnis Gruppierungen X : Gruppierungen Y ist im allgemeinen nicht größer als 3:1, vorzugsweise nicht größer als 2:1 und insbesondere nicht größer als 1:1, wobei ein Verhältnis von nicht größer als 1:2 besonders bevorzugt ist.

Das obige Verhältnis ist aber auch nicht kleiner als 1:20 und insbesondere nicht kleiner als 1:10.

Vorzugsweise handelt es sich bei dem bzw. den Monomer(en) (B) um eine flüssige Verbindung, die sich homogen mit dem Vorkondensat (A) mischen läßt und/oder dieses (teilweise) löst.

Neben dem bzw. den Monomeren (B) mit mindestens (und vorzugsweise) zwei Gruppierungen Y können auch ein oder mehrere Monomere mit einer radikalisch polymerisierbaren Gruppierung Y bei der radikalischen Polymerisation anwesend sein, obwohl dies nicht bevorzugt ist. Beispiele für derartige Monomere sind z.B. von einwertigen Alkoholen abgeleitete (Meth)acrylsäure-ester, Styrol, Vinylacetat usw. Werden derartige Monomere eingesetzt, wird ihre Menge vorzugsweise so gewählt, daß nicht mehr als 10, insbesondere nicht mehr als 5 und besonders bevorzugt nicht mehr als 2% der anwesenden Gruppierungen Y aus diesen Monomeren stammen.

Gemäß einer bevorzugten Ausführungsform der vorliegenden Erfindung findet die gemeinsame radikalische Polymerisation von Vorkondensat (A) und Monomer (B) in Gegenwart von nanoskaligen Teilchen (C) einer Metallverbindung statt. Wenn nanoskalige Teilchen anwesend sein sollen, liegen diese in der Regel in einer Menge von nicht mehr als 50 Gew.-%, vorzugsweise nicht mehr als 30 Gew.-% und insbesondere nicht mehr als 10 Gew.-%, bezogen auf die Gesamtmenge (A) + (B) + (C), vor.

Unter "nanoskaligen Teilchen" werden Teilchen mit einer durchschnittlichen Größe von nicht mehr als 100 nm, insbesondere nicht mehr als 50 nm und besonders bevorzugt nicht mehr als 20 nm verstanden. Hinsichtlich der Untergrenze gibt es keine besonderen Beschränkungen, wenngleich diese Untergrenze aus praktischen Gründen in der Regel bei 0,5 nm, insbesondere 1 nm und häufiger 2 nm liegt.

Bei den nanoskaligen Teilchen kann es sich beispielsweise handeln um Oxide wie ZnO, CdO, SiO₂, TiO₂, ZrO₂, CeO₂, SnO₂, Al₂O₃, In₂O₃, La₂O₃, Fe₂O₃, Cu₂O, V₂O₅, Nb₂O₅, Ta₂O₅, MoO₃ oder WO₃; Chalkogenide, z.B. Sulfide wie CdS, ZnS, PbS oder Ag₂S; Selenide wie GaSe, CdSe oder ZnSe; und Telluride wie ZnTe oder CdTe; Halogenide wie AgCl, AgBr, AgI, CuCl, CuBr, CdI₂ oder PbI₂; Carbide wie CdC₂ oder SiC; Arsenide wie AlAs, GaAs oder GeAs; Antimonide wie InSb; Nitride wie BN, AlN, Si₃N₄ oder Ti₃N₄; Phosphide wie GaP, InP, Zn₃P₂ oder Cd₃P₂; Phosphate; Silicate; Zirkonate; Aluminate; Stannate; und entsprechende Mischoxide, z.B. solche mit Perowskitstruktur (wie BaTiO₃ oder PbTiO₃).

Die Herstellung dieser nanoskaligen Teilchen kann auf übliche Weise erfolgen, z.B. durch Flammpyrolyse, Plasmaverfahren, Kolloidtechniken, Sol-Gel-Prozesse, kontrollierte Nukleations- und Wachstumsprozesse, MOCVD-Verfahren und Emulsionsverfahren.
Diese Verfahren sind in der Literatur ausführlich beschrieben, ebenso wie die gegebenenfalls vorgenommene Oberflächenmodifizierung dieser nanoskaligen Teilchen (z.B. zum Zwecke der Kompatibilisierung mit den Komponenten (A) und (B) und/oder der Anpassung an das gewählte Polymerisationsverfahren).

Die Herstellung der nanoskaligen Teilchen kann auch in situ in Anwesenheit des Vorkondensats (A) und/oder des Monomeren (B) erfolgen, beispielsweise unter Verwendung von Sol-Gel-Prozessen.

Erfindungsgemäß bevorzugte nanoskalige Teilchen sind solche von TiO₂ und/oder ZrO₂ und/oder Ta₂O₅. Insbesondere bei der Verwendung von TiO₂-Nanoteilchen werden diese vor ihrem Einsatz vorzugsweise einer (in den Beispielen noch näher erläuterten) Oberflächenmodifizierung unterzogen, um die Matrix vor einer eventuellen photokatalytischen Wirkung des TiO₂ (und damit vor einer Gelbfärbung) zu schützen.

Die Mitverwendung nanoskaliger Teilchen führt in vorteilhafter Weise zu einer Erhöhung der Brechzahl. Relativ hohe Brechwerte können auch durch Verwendung von Monomeren (B) mit hoher Mol-refraktion (z.B. Bis-GMA) erzielt werden. Auch eine Kombination der soeben genannten Maßnahmen ist möglich (siehe Beispiel 16 unten). Im letztgenannten Fall entspricht der sich ergebende Brechwert des Formkörpers der Addition der beiden Einzelmaßnahmen zur Steigerung des Matrix-Brechwerts.

Die radikalische Polymerisation des Vorkondensats (A) und des Monomeren (B) kann auf jede dem Fachmann geläufige Art und Weise erfolgen, z.B. thermisch, photochemisch (z.B. mit Hilfe von UV-Licht) und/oder durch Elektronenstrahlen.

Erfindungsgemäß wird es bevorzugt, daß die radikalische Polymerisation eine thermisch initiierte Polymerisation umfaßt. In diesem Fall wird der Polymerisationsmischung vorzugsweise ein thermischer Initiator (Thermostarter) zugesetzt. Geeignete thermische Initiatoren sind u.a. organische Peroxide in Form von Diacylperoxiden, Peroxydicarbonaten, Alkylperestern, Dialkylperoxiden, Perketalen, Ketonperoxiden und Alkylhydroperoxiden sowie Azo-Verbindungen. Konkrete Beispiele für derartige thermische Initiatoren sind Dibenzoylperoxid, tert.-Butylperbenzoat und Azobisisobutyronitril.

Der Polymerisationsinitiator wird gewöhnlich in einer Menge von 0,01 bis 2, vorzugsweise 0,01 bis 0,2 Gew.-%, insbesondere 0,05 bis 0,1 Gew.-%, bezogen auf (A) + (B), eingesetzt.

Die Polymerisationstemperatur hängt in erster Linie von der zersetzungstemperatur des thermischen Initiators ab, ist jedoch vorzugsweise nicht höher als 135°C und insbesondere nicht höher als 110°C.

Wird eine photochemische Polymerisation, z.B. mit Hilfe von UV-Strahlen, beabsichtigt, so muß vor der Polymerisation ein Photoinitiator zugesetzt werden. Als Photoinitiatoren können z.B. die im Handel erhältlichen Starter verwendet werden. Beispiele hierfür sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure® -Typ; Darocur 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon. Der Photoinitiator wird in denselben Mengen wie oben für den Polymerisationsinitiator angegeben eingesetzt.

Gemäß einer bevorzugten Ausführungsform der vorliegenden Erfindung wird die radikalische Polymerisation entweder thermisch oder photochemisch initiiert oder es wird eine Kombination aus photochemischer Härtung mit nachgeschalteter thermischer Härtung eingesetzt. Die letztgenannte Variante ist besonders bevorzugt.

Die photochemische Härtung bzw. Vorhärtung wird vorzugsweise unter weitgehendem Ausschluß von Sauerstoff durchgeführt. Des weiteren ist es bevorzugt, die photochemische Härtung in mindestens zwei Stufen durchzuführen, wobei zwischen aufeinanderfolgenden Stufen die Polymerisationswärme durch Kühlung (z.B. auf 0 bis 5°C) abgeführt wird.

Die Kombination aus photochemischer Härtung und thermischer Nachhärtung hat z.B. den Vorteil, daß man die Masse nach der (relativ schnell verlaufenden) photochemischen Härtung zu einem formstabilen, aber noch relativ weichen Formkörper aus der Form entnehmen und außerhalb der Form thermisch nachhärten kann, wodurch die Nutzungszeiten der (mitunter sehr teuren) Gießformen deutlich verkürzt werden können. Typische Härtungszeiten für die photochemische Vorhärtung liegen z.B. bei etwa 2 Stunden, während für die thermische Nachhärtung üblicherweise zwischen 5 und 20 Stunden benötigt werden.

Das erfindungsgemäße Verfahren kann z.B. so durchgeführt werden, daß man das Vorkondensat (A), das Monomer (B) und gegebenenfalls die nanoskaligen Teilchen (C) sowie Photoinitiator und/oder thermischen Polymerisationsinitiator homogen mischt, die resultierende Mischung in eine Form einbringt und die radikalische Polymerisation durch Bestrahlung und/oder Erwärmung bewirkt. Spätestens unmittelbar vor der Polymerisation müssen eventuell vorhandene flüchtige Komponenten soweit wie möglich entfernt werden. Bei derartigen flüchtigen Komponenten handelt es sich z.B. um Wasser und flüchtige Hydrolyseprodukte aus der Herstellung des Vorkondensats (A) und/oder der nanoskaligen Teilchen (C) sowie gegebenenfalls zwecks Vereinfachung des Mischens zugegebene flüchtige organische Lösungsmittel.

Wird ein gefärbter Formkörper gewünscht, ist es selbstverständlich möglich, der obigen Mischung spätestens vor der Polymerisation einen geeigneten Farbstoff zuzusetzen.

Nach beendeter Polymerisation (Härtung) wird der Formkörper aus der Form entnommen (falls nicht bereits nach der photochemischen Vorpolymerisation geschehen) und gegebenenfalls durch geeignete Be- und/oder Verarbeitungsverfahrens in den gewünschten endgültigen Formkörper, z.B. ein Brillenglas oder eine Kameralinse, umgewandelt.

Da das erfindungsgemäße Verfahren zu Formkörpern führt, die u.a. relativ spannungsfrei sind, eignet sich dieses Verfahren insbesondere auch zur Herstellung von Formkörpern mit relativ großen Abmessungen, z.B. solchen mit einem Volumen von mindestens 1 cm³, vorzugsweise mindestens 5 cm³ und insbesondere mindestens 10 cm³.

Das erfindungsgemäße Verfahren weist eine Reihe von Vorteilen auf. Insbesondere sind die dadurch zugänglichen Formkörper hoch transparent, homogen, spannungsfrei (und dadurch auch für größere Bauteile geeignet), inhärent kratz- und abriebfest und mechanisch sehr fest. Weiter weisen sie insbesondere bei Verwendung von nanoskaligen Teilchen (z.B. aus TiO₂) eine variable (z.B. sehr hohe) Brechzahl auf, ohne daß dadurch die Transparenz beeinträchtigt wird, und sind schneller und einfacher herstellbar als für optische Zwecke einsetzbare Formkörper des Standes der Technik. Das erfindungsgemäße Verfahren führt bei geeigneter Verfahrensführung in weniger als einem Tag zum gewünschten Formkörper mit den obigen vorteilhaften Eigenschaften.

Aufgrund ihrer eigenen hohen Kratz- und Abriebfestigkeit benötigen die erfindungsgemäß erhältlichen Formkörper im Gegensatz zur herkömmlichen transparenten Kunststoffen keine zusätzliche Kratzfestbeschichtung, um im Dauergebrauch ohne signifikante Qualitätseinbuße einsetzbar zu sein; durch den Wegfall eines kompletten Verfahrensschrittes entfallen beträchtliche Investitions- und Arbeitskosten; zudem entfällt ein produktions-immanenter Risikofaktor der Ausschußherstellung.

Weiter sind im erfindungsgemäßen Verfahren handelsübliche Ausgangsverbindungen (Silane (a), (b), Monomere (B)) einsetzbar, die in der Regel keiner weiteren Reinigung vor ihrem Einsatz bedürfen. Den einzigen Verfahrensschritt vor der eigentlichen Polymerisation stellt die Hydrolyse/Kondensation bzw. Cokondensation des Silans/der Silane dar. Da die Vorkondensate (A) mindestens 14 Tage lagerfähig sind, ohne Eigenschafts- oder Strukturveränderungen zu erleiden, entsteht dadurch kein entscheidendes Ablaufproblem im Verfahren. Somit werden hohe Produktionskosten vermieden, ohne die Qualität des Produkts zu beeinträchtigen.

Die erfindungsgemäß notwendigen Produktionszeiten erlauben in hohem Maße eine industrielle Nutzung des Verfahrens. Durch das (erfindungsgemäß bevorzugte) frühzeitige Entformen (nach der Photopolymerisation) werden die Umlaufzeiten der mitunter sehr teuren Gießwerkzeuge gering gehalten und ein mehrfacher Einsatz derselben pro Tag ist möglich.

Die im erfindungsgemäßen Verfahren einsetzbaren Ausgangsmaterialien und die daraus entstehenden Polymerisate sind außerdem toxikologisch und ökologisch unbedenklich. Da alle eingesetzten Monomere und deren Mischungen bis zum Zeitpunkt der Polymerisation vorzugsweise flüssig sind, ist eine einfache Vorgehensweise möglich (für gasförmige bzw. feste (unlösliche) Produkte wäre ein wesentlich größerer Aufwand notwendig).

Die vorliegende Erfindung wird im folgenden durch Beispiele, die lediglich der Veranschaulichung dienen, weiter erläutert.

In diesen Beispielen werden die folgenden Abkürzungen verwendet:
- MPTS =: Methacryloyloxypropyltrimethoxysilan
- PTES =: Phenyltriethoxysilan
- DMDES =: Dimethyldiethoxysilan
- TEGDMA =: Tetraethylenglykoldimethacrylat
- PEGDMA =: Polyethylenglykol(400)dimethacrylat
- DDDMA =: 1,12-Dodecandioldimethacrylat
- Bis-GMA =: 2,2-Bis[4-(3'-methacryloyloxy-2'-hydroxy)propoxyphenyl]propan
- AIBN =: Azobisisobutyronitril

### HERSTELLUNGSBEISPIEL 1

465,61 g MPTS (= 1,875 Mol) werden in einem 1000 ml-Rundkolben mit 50,62 g 0,1-molarer Salzsäure versetzt. Der Kolben ist mit einem Rückflußkühler versehen. Das Gemisch wird 24 Stunden lang bei einer Temperatur von 40 ± 2°C gehalten (nach ca. 15 Minuten wird das inhomogene Gemisch durch das entstandene Methanol einphasig). Anschließend werden innerhalb von 2,5 Stunden die flüchtigen Bestandteile im Rahmen einer Vakuumdestillation bei maximal 40°C entfernt. Das viskose MPTS-Kondensat wird zurückgewogen und das Gewicht mit der anfänglich eingesetzten Molmenge verglichen. Für die weiteren Berechnungen wird das sich ergebende Molgewicht pro kondensierter MPTS-Einheit herangezogen: Rückwaage = 349,23 g, entsprechend einem Molekulargewicht (Äquivalentgewicht) von 186,28.

### HERSTELLUNGSBEISPIEL 2

49,84 g MPTS (0,201 Mol) werden mit 68,96 g PTES (0,287 Mol) gemäß Herstellungsbeispiel 1 mit 13,25 g 0,1-molarer Salzsäure vermischt und 24 Stunden auf 40 ± 2°C gehalten. Die weitere Verarbeitung erfolgt wie in Herstellungsbeispiel 1. Ausbeute: 81,16 g Produkt.

### HERSTELLUNGSBEISPIEL 3

376,60 g MPTS (1,51 Mol) werden mit 56,18 g DMDES (0,38 Mol) gemäß Herstellungsbeispiel 1 mit 48,02 g 0,1-molarer Salzsäure vermischt und 24 Stunden auf 40 ± 2°C gehalten. Die weitere Verarbeitung erfolgt wie in Herstellungsbeispiel 1. Ausbeute: 317,98 g Produkt.

### BEISPIEL 1

19,02 g Vorkondensat aus Herstellungsbeispiel 1 und 33,01 g TEGDMA werden mit 0,0521 g Irgacure® 184 und 0,0251 g AIBN unter Ausschluß von UV-Licht miteinander verrührt. Das Gemisch wird auf 0°C heruntergekühlt und anschließend nochmals intensivmiteinem Ultra-Turrax® -Rührer homogenisiert. In einem Rotationsverdampfer wird der anwesende Sauerstoff weitgehend abgezogen (Restdruck: 10 mbar) und darauf wird das Vakuum durch reinen Stickstoff bis zum Erreichen von Atmosphärendruck ersetzt (wodurch störende Gasbläschen entfernt werden). Das Gemisch wird sodann vorsichtig in die vorbereiteten Formen(Teflonschalenunterschiedlicher Geometrie: Stab oder Topf mit einem Volumen von 10 cm³) gegeben und einer Photopolymerisation in einer Beltron® -Belichtungsanlage unterzogen (Leistungsaufnahme der Lampe: 2500 Watt; Bandgeschwindigkeit: 4 m/Min.). Anschließend werden die Proben 15 Minuten lang in einem Gefrierschrank aufbewahrt. Das soeben geschilderte Verfahren wird noch zweimal mit gleicher Lampenleistung, Bandgeschwindigkeit und Zwischenkühlung wiederholt. Die erhaltenen Polymerisate sind kompakt und farblos, jedoch noch relativ weich. Sie werden in diesem Zustand vorsichtig aus den Gießformen entnommen. Anschließend wird eine thermische Nachpolymerisation mit dem folgenden Temperaturprogramm durchgeführt: Start bei 60°C, 2-stündiges Aufheizen auf 95°C, 14-stündiges Halten bei 95°C und anschließendes 5-stündiges Abkühlen auf 20°C.

Die erhaltenen Polymerisate sind transparent, farblos und hart. Einige Eigenschaften derselben sind unten in der Tabelle 1 angegeben.

### BEISPIEL 2

17,59 g Vorkondensat aus Herstellungsbeispiel 1 und 91,49 g TEGDMA werden mit 0,1091 g Irgacure® 184 und 0,1062 g AIBN unter Ausschluß von UV-Licht miteinander verrührt und anschließend wie in Beispiel 1 weiterbehandelt.

### Gießformen: siehe Beispiel 1.

Aushärtung: 6 Durchgänge an der Beltron® -Belichtungsanlage wie in Beispiel 1 beschrieben, jedoch mit einer Bandgeschwindigkeit von 2 m/Min.

Thermische Aushärtung: 24 Stunden bei 90°C.

Die erhaltenen Polymerisate sind transparent, farblos und hart. Einige Eigenschaften derselben sind unten in Tabelle 1 angegeben.

### BEISPIEL 3

3,33 g des Vorkondensats von Herstellungsbeispiel 2 werden mit 6,61 g TEGDMA und 0,0082 g Irgacure® 184 und 0,0040 g AIBN unter Ausschluß von UV-Licht miteinander verrührt und anschließend wie in Beispiel 1 weiterbehandelt.

### Gießform: Topf (V = 10 cm³)

Aushärtung: 5 Durchgänge an der Beltron -Belichtungsanlage wie in Beispiel 1 beschrieben, jedoch mit einer Bandgeschwindigkeit von 3 m/Min. (Durchgänge 1-3) bzw. 2 m/Min.

Thermische Aushärtung: Start bei 60°C, 2-stündiges Aufheizen auf 95°C, 14-stündiges Halten bei 95°C und 4-stündiges Abkühlen auf 20°C.

Die erhaltenen Polymerisate sind transparent, farblos und hart. Einige Eigenschaften derselben sind unten in Tabelle 1 angegeben.

### BEISPIEL 4

(a) 31,30 g Vorkondensat aus Herstellungsbeispiel 1, 82,63 g TEGDMA und 137,63 g PEGDMA werden mit 0,2513 g Irgacure® 184 und 0,2610 g AIBN unter Ausschluß von UV-Licht miteinander verrührt und anschließend wie in Beispiel 1 weiterbehandelt.
Gießformen: wie in Beispiel 1 und zusätzlich ein großer Topf (V = 100 cm³).
Aushärtung: 4 Durchgänge an der Beltron® -Belichtungsanlage wie in Beispiel 1 beschrieben, jedoch mit einer Bandgeschwindigkeit von 3 m/Min. (Durchgänge 1-3) bzw. 1 m/Min.
Thermische Aushärtung: 24 Stunden bei 90°C.

Die erhaltenen Polymerisate sind transparent, farblos und hart. Einige Eigenschaften derselben sind in Tabelle 1 angegeben.

(b) 30,18 g Vorkondensat aus Herstellungsbeispiel 1, 26,77 g TEGDMA und 43,79 g PEGDMA werden mit 0,1500 g Irgacure® 184 und 0,0784 g AIBN unter Ausschluß von UV-Licht miteinander verrührt und anschließend wie in Beispiel 1 weiterbehandelt.

Gießformen: ein Stab, ein großer Topf (V = 100 cm³). Aushärtung: 6 Durchgänge an der Beltron® -Belichtungsanlage wie in Beispiel 1 beschrieben. Thermische Aushärtung: 12 Stunden bei 90°C.

Die erhaltenen Polymerisate sind transparent, farblos und hart. Einige Eigenschaften derselben sind in Tabelle 1 angegeben.

(c) 7,22 g Vorkondensat aus Herstellungsbeispiel 1, 12,57 g TEGDMA und 2,20 g PEGDMA werden mit 0,0220 g Irgacure® 184 und 0,0127 g AIBN unter Ausschluß von UV-Licht miteinander verrührt und anschließend wie in Beispiel 1 weiterbehandelt.

Gießform: kleiner Topf (V = 10 cm³).
Aushärtung: 3 Durchgänge an der Beltron® -Belichtungsanlage wie in Beispiel 1 beschrieben.
Thermische Aushärtung: Start bei 60°C, 2-stündiges Aufheizen auf 95°C, 14-stündiges Halten bei 95°C und 5-stündiges Abkühlen auf 20°C.

Die erhaltenen Polymerisate sind transparent, farblos und hart. Einige Eigenschaften derselben sind in Tabelle 1 angegeben.

### BEISPIEL 5

(a) 8,46 g Vorkondensat aus Herstellungsbeispiel 1, 7,45 g TEGDMA und 7,61 g DDDMA werden mit 0,0237 g Irgacure® 184 und 0,0119 g AIBN unter Ausschluß von UV-Licht miteinander verrührt und anschließend wie in Beispiel 1 weiterbehandelt.

Gießformen: ein Stab, ein kleiner Topf (V = 10 cm³). Aushärtung: 3 Durchgänge an der Beltron® -Belichtungsanlage wie in Beispiel 1 beschrieben.
Thermische Aushärtung: Start bei 60°C, 2-stündiges Aufheizen auf 95°C, 54-stündiges Halten bei 95°C und 5-stündiges Abkühlen auf 20°C.

Die Polymerisate sind transparent, farblos und hart. Einige Eigenschaften derselben sind in Tabelle 1 angegeben.

(b) 8,12 g Vorkondensat aus Herstellungsbeispiel 1, 40,00 g TEGDMA und 2,20 g DDDMA werden mit 0,0250 g Irgacure® 184 und 0,0240 g AIBN unter Ausschluß von UV-Licht miteinander verrührt und anschließend wie in Beispiel 1 weiterbehandelt.

Gießformen: ein Stab, ein großer Topf (V = 100 cm³) sowie zwei Glassubstrate, die durch einen Dichtungsring abgedichtet und voneinander getrennt sind (V = 10 cm³). Aushärtung: 6 Durchgänge an der Beltron -Belichtungsanlage wie in Beispiel 1 beschrieben.
Thermische Aushärtung: 14 Stunden bei 90°C.

Die Polymerisate sind transparent, farblos und hart. Einige Eigenschaften derselben sind in Tabelle 1 angegeben.

(c) 22,53 g Vorkondensat aus Herstellungsbeispiel 1, 79,31 g TEGDMA und 40,57 g DDDMA werden mit 0,1420 g Irgacure® 184 und 0,0689 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).
Aushärtung: 4 Durchgänge an der Beltron® -Belichtungsanlage wie in Beispiel 1 beschrieben und zwei Durchgänge an der Beltron® -Belichtungsanlage wie in Beispiel 1 beschrieben, jedoch mit einer Bandgeschwindigkeit von 2 m/Min.

Thermische Aushärtung: Start bei 45°C, 3-stündiges Aufheizen auf 95°C, 14-stündiges Halten bei 95°C und 4-stündiges Abkühlen auf 25°C.

Die erhaltenen Polymerisate sind transparent, farblos und hart. Einige Eigenschaften derselben sind in Tabelle 1 angegeben.

### BEISPIEL 6

8,45 g Vorkondensat aus Herstellungsbeispiel 1 und 15,21 g DDDMA werden mit 0,0118 g Irgacure® 184 und 0,0073 g AIBN unter Ausschluß von UV-Licht miteinander verrührt und anschließend wie in Beispiel 1 weiterbehandelt.

Gießformen: ein Stab, ein kleiner Topf (V = 10 cm³).
Aushärtung: 3 Durchgänge an der Beltron® -Belichtungsanlage wie in Beispiel 1 beschrieben.
Thermische Aushärtung: Start bei 60°C, 2-stündiges Aufheizen auf 95°C, 54-stündiges Halten bei 95°C und 5-stündiges Abkühlen auf 20°C.

Die erhaltenen Polymerisate sind transparent, farblos und hart.

### BEISPIEL 7

(a) 3,62 g Vorkondensat aus Herstellungsbeispiel 1, 6,38 g TEGDMA und 13,19 g Bis-GMA werden mit 0,0075 g Irgacure® 184 und 0,0091 g AIBN unter Ausschluß von UV-Licht miteinander verrührt und anschließend wie in Beispiel 1 weiterbehandelt.

Gießform: kleiner Topf (V = 10 cm³).
Aushärtung: 5 Durchgänge an der Beltron ® -Belichtungsanlage wie in Beispiel 1 beschrieben, jedoch mit einer Bandgeschwindigkeit von 3 m/Min. (Durchgänge 1-3) bzw. mit einer Bandgeschwindigkeit von 1 m/Min.

Thermische Aushärtung: Start bei 60°C, 2-stündiges Aufheizen auf 95°C, 12-stündiges Halten bei 95°C und 5-stündiges Abkühlen auf 20°C.

Die erhaltenen Polymerisate sind transparent, leicht gelb und hart. Einige Eigenschaften derselben sind in Tabelle 1 angegeben.

(b) 22,53 g Vorkondensat aus Herstellungsbeispiel 1, 79,29 g TEGDMA und 13,50 g Bis-GMA werden mit 0,1158 g Irgacure® 184 und 0,0689 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³). Aushärtung: 4 Durchgänge an der Beltron® -Belichtungsanlage wie in Beispiel 1 beschrieben und ein Durchgang an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 54-stündiges Halten bei 95°C und 4-stündiges Abkühlen auf 20°C.

Die erhaltenen Polymerisate sind transparent, farblos und hart. Einige Eigenschaften derselben sind in Tabelle 1 angegeben.

(c) 25,19 g Vorkondensat aus Herstellungsbeispiel 1, 87,27 g TEGDMA und 67,48 g Bis-GMA werden mit 0,1801 g Irgacure® 184 und 0,0760 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³). Aushärtung: 4 Durchgänge an der Beltron® -Belichtungsanlage wie in Beispiel 1 beschrieben und zwei Durchgänge an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 14-stündiges Halten bei 95°C und 4-stündiges Abkühlen auf 25°C.

Die erhaltenen Polymerisate sind transparent, farblos und hart. Einie Eigenschaften derselben sind in Tabelle 1 angegeben.

### BEISPIEL 8

22,79 g Vorkondensat aus Herstellungsbeispiel 1, 87,23 g TEGDMA, 24,86 g Bis-GMA und 16,23 g DDDMA werden mit 0,1510 g Irgacure® 184 und 0,0690 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).
Aushärtung: 4 Durchgänge an der Beltron® -Belichtungsanlage wie in Beispiel 1 beschrieben und zwei Durchgänge an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 14-stündiges Halten bei 95°C und 4-stündiges Abkühlen auf 25°C.

Einige Eigenschaften der erhaltenen Polymerisate sind in Tabelle 1 angegeben.

### BEISPIEL 9

45,58 g Vorkondensat aus Herstellungsbeispiel 1, 190,30 g TEGDMA, 26,42 g PEGDMA und 32,46 g DDDMA werden mit 0,2945 g Irgacure® 184 und 0,1382 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).
Aushärtung: 4 Durchgänge an der Beltron® -Belichtungsanlage wie in Beispiel 1 beschrieben und zwei Durchgänge an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 4-stündiges Halten bei 120°C und 4-stündiges Abkühlen auf 25°C.

Einige Eigenschaften der erhaltenen Polymerisate sind in Tabelle 1 angegeben.

### BEISPIEL 10

17,99 g Vorkondensat aus Herstellungsbeispiel 3 und 102,25 g TEGDMA werden mit 0,1200 g Irgacure® 184 und 0,0326 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).
Aushärtung: 4 Durchgänge an der Beltron® -Belichtungsanlage wie in Beispiel 1 beschrieben sowie zwei Durchgänge an der Beltron® -Belichtungsanlage wie in Beispiel 1 beschrieben, jedoch mit einer Bandgeschwindigkeit von 2 m/Min.

Thermische Aushärtung: Start bei 60°C, 5-stündiges Aufheizen auf 95°C, 14-stündiges Halten bei 95°C und 4-stündiges Abkühlen auf 25°C.

Einige Eigenschaften der erhaltenen Polymerisate sind in Tabelle 1 angegeben.

### BEISPIEL 11

23,28 g Vorkondensat aus Herstellungsbeispiel 3, 111,67 g TEGDMA und 17,60 g DDDMA werden mit 0,1523 g Irgacure® 184 und 0,0747 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).
Aushärtung: 4 Durchgänge an der Beltron -Belichtungsanlage wie in Beispiel 1 beschrieben sowie zwei Durchgänge an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 14-stündiges Halten bei 95°C und anschließendes 4-stündiges Abkühlen auf 25°C.

Einige Eigenschaften der erhaltenen Polymerisate sind in Tabelle 1 angegeben.

### BEISPIEL 12

23,28 g Vorkondensat aus Herstellungsbeispiel 3 und 111,67 g TEGDMA und 28,62 g PEGDMA werden mit 0,1633 g Irgacure® 184 und 0,0748 g AIBN unter Ausschluß von UV-Licht miteinander verrührt und anschließend wie in Beispiel 1 weiterbehandelt.

Gießformen: ein Stab, ein kleiner Topf (V = 10 cm³) sowie zwei Glassubstrate, die durch einen Dichtungsring abgedichtet und voneinander getrennt sind (V = 40 cm³).

Aushärtung: 4 Durchgänge an der Beltron® -Belichtungsanlage wie in Beispiel 1 beschrieben und zwei Durchgänge an der Beltron® -Belichtungsanlage wie in Beispiel 1 beschrieben, jedoch mit einer Bandgeschwindigkeit von 2 m/Min.
Thermische Aushärtung: Start bei 60°C, 5-stündiges Aufheizen auf 95°C, 14-stündiges Halten bei 95°C und 4-stündiges Abkühlen auf 25°C.

Einige Eigenschaften der erhaltenen Polymerisate sind in Tabelle 1 angegeben.

Alle Proben aus den Beispielen 1 bis 12 können mittels handelsüblicher Mittel bearbeitet werden (Sägen, Fräsen, Schleifen, Polieren usw.) und sind durch wasserlösliche Diffusions-farbstoffe anfärbbar.

In der folgenden Tabelle 1 werden die folgenden Abkürzungen verwendet:
HU: Vickers-Härte (N/mm²]; eR: elastische Rückfederung (%);
aₙ: Schlagzähigkeit (kJ/m²); n_{E}: Brechzahl bei 546,1 nm;
V_{E}: Abbé-Zahl; G: Gelbwert; α: thermischer Ausdehnungskoeffizient (10⁻⁶/K; gemessen zwischen -50°C und +50°C)

**TABELLE 1**

| | Beispiel Nr. | | | | | | | | | | | | | | | | | |
|---|---|---|---|---|---|---|---|---|---|---|---|---|---|---|---|---|---|---|
| | 1 | 2 | 3 | 4 | | | 5 | | | 6 | 7 | | | 8 | 9 | 10 | 11 | 12 |
| | | | | a | b | c | a | b | c | | a | b | c | | | | | |
| HU | 110 | 118 | 76 | | | | | 89 | 90 | | | 107 | 122 | 97 | | 99 | | |
| eR | 78 | 66 | 66 | 74 | | 77 | | 58 | 73 | | | 69 | 63 | 67 | | 67 | | |
| aₙ | | | 17.9 | 17 | 6.0 | | | 6.6 | 6.7 | | | 10 | 5 | 4.0 | 5.5 | 7.3 | 5.9 | 10 |
| n_{E} | 1.5058 | 1.5083 | 1.5182 | 1.5029 | | | | 1.5077 | 1.5064 | | 1.5435 | 1.5157 | 1.5320 | 1.5182 | | 1.5082 | | |
| v_{E} | 55,6 | 55,8 | 49,0 | 54,3 | | | | 55,3 | 55,7 | | 44,2 | 51,5 | 45,2 | 49,8 | | 55,3 | | |
| G | -0,2 | | | 0,8 | | -0,9 | | | -1,6 | | | | -0,5 | 1,2 | -0,6 | | | |
| α | 85 | | | | | 99 | | | | | | | 76 | | | 92 | | |

### BEISPIEL 13

5,59 g Vorkondensat aus Herstellungsbeispiel 1 und 9,91 g TEGDMA werden mit 0,0152 g Irgacure® 184 unter Ausschluß von UV-Licht miteinander verrührt und anschließend wie in Beispiel 1 weiterbehandelt.

### Gießformen: Teflontopf (V = 10 cm³).

Aushärtung: 4 Durchgänge an der Beltron® -Belichtungsanlage wie in Beispiel 1 beschrieben und ein Durchgang an der Beltron® -Belichtungsanlage wie in Beispiel 1 beschrieben, jedoch mit einer Bandgeschwindigkeit von 2 m/Min.
Thermische Aushärtung: Start bei 45°C, 5-stündiges Aufheizen auf 95°C, 14-stündiges Halten bei 95°C und 4-stündiges Abkühlen auf 25°C.

Die erhaltenen Polymerisate zeigen eine Vickers-Härte von 73 N/mm² und eine elastische Rückfederung von 49%.

### BEISPIEL 14

Beispiel 13 wird wiederholt, jedoch werden zusätzlich 0,0071 g AIBN zugemischt.
Vickers-Härte: 90 N/mm², elastische Rückfederung: 50%.

### BEISPIEL 15

Im folgenden wird die Verwendung von nanoskaligen Teilchen (c) veranschaulicht.

### Vorschrift (a):

In allen Versuchen wurde 10 g MPTS (destilliert und sauer 1,5-stöchiometrisch mit 0,1-n HCl vorhydrolysiert) und 17,19 g TEGDMA (mit 2% NaOH entinhibiert und getrocknet) zusammen 15 Minuten bis zur Homogenität gerührt. Danach erfolgte die Zugabe von 0,07 g (0,25 Gew.-%) Thermostarter (AIBN) und TiO₂-Sol, worauf 15 Minuten bis zur Homogenität gerührt wurde.

Wurde Sol zugegeben, muß das Lösungsmittel von der Polymerisation entfernt werden.

Das eingesetzte Titanoxid-Sol wurde entsprechend der Synthese von Titanoxid im Sol-Prozeß nach Yoldas unter Wasserüberschuß mit anorganischer Säure als Stabilisator hergestellt. Hydrolyseverhältnis zwischen 1,5 und 4,6; Teilchengrößen zwischen 3,5 und 20 nm.

### Vorschrift (b): (Sol tio66, Teilchengröße 12 nm)

40 g Isopropanol und 0,75 g HCl (rauchend) und 0,74 g H₂O (bidest.) wurden 10 Minuten zusammen gerührt. Danach wurden 2,5 g Titanisopropanolat unter Rühren zugetropft. Alle verwendeten Sole wurden nach diesem Schema synthetisiert.

### Aushärten der Komposite:

Zur Vermeidung von Rissen bei der Polymerisation wurde bei allen Kompositen folgendes Temperaturprogramm eingehalten:

### Vorschrift (c) :

12 Stunden Erwärmen von 51 auf 55°C (Temperaturrampe). 4 Stunden Erwärmen von 55 auf 90°C (Temperaturrampe). 12 Stunden Halten bei konstanter Temperatur (90°C).

### Versuche

### V1: (Matrix ohne Titanoxid)

Nur Matrix (Vorschrift (a)) nach Vorschift (c) ausgehärtet
nₑ = 1,507; Abbe-Zahl = 55.

### V2: (Matrix mit Titanoxid-Nanoteilchen)

Matrix nach Vorschrift (a); Titanoxid-Sol (3,6 Gew.-% TiO₂, bezogen auf Gesamtmatrixmenge (flüssig)) nach Vorschrift (b) zugegeben. Aushärtung nach Vorschrift (c).
Der erhaltene Komposit zeigt eine merkliche Gelbfärbung (Gelbwert nach DIN 6167:45).

### V3: (Matrix mit Aluminiumoxid-Nanoteilchen, ohne Titanoxid)

Zur Matrix nach Vorschrift (a) werden 2 Gew.-% Al-sec.-Butylat, bezogen auf die flüssige Matrix, gegeben und es wird nach Vorschrift (c) ausgehärtet.
Komposit ist farblos, transparent und sehr homogen:
nₑ = 1,51; Abbe-Zahl = 55,15.

### V4: (Matrix mit mit Aluminiumoxid beschichteten Titanoxid-Nanoteilchen)

Sol-Synthese nach Vorschrift (b); danach Zugabe von Al-sec.-Butylat im Mol-Verhältnis Al-Precursor/Ti-Precursor 1:2 zum Sol und 2 h Rühren. Zugabe von Matrix nach Vorschrift (a) und weiterem Al-sec.-Butylat wie in V3. Aushärtung nach Vorschrift (c).
Deutlich reduzierte Gelbfärbung (Gelbwert nach DIN 6167: 19).

### Effektivere Beschichtung:

Vorschrift (d):
MPTS wurde zum Sol zugegeben und danach wurde 2 Stunden gerührt. Dann wurde das Sol unter Rückfluß 1 h bei 100°C erwärmt.

### V5: (Matrix mit Titanoxid-Nanoteilchen mit verbesserter Beschichtung)

Matrix nach Vorschrift (a); Zugabe von modifiziertem Sol (10 Gew.-% Titanoxid, bezogen auf flüssige Matrix) nach den Vorschriften (b) und (d); Aushärtung nach Vorschrift (c) unter Zugabe von zusätzlichen 2 Gew.-% Al-sec.-Butylat (auf reine Matrix bezogen) als Polymerisationshilfe und unter Stickstoff. Vernachläßigbare Gelbfärbung des Komposits (Gelbwert nach DIN 6167:5).

### V6: (Matrix mit Titanoxid-Nanoteilchen, die mit Si-Oxid und Al-Oxid beschichtet sind)

Matrix nach Vorschrift (a). Sol nach (b) wurde gemäß Vorschrift (d) modifiziert. Dann wurde dem Sol das Lösungsmittel entzogen und das resultierende Pulver wurde in Isopropanol gelöst und Al-sec.-Butylat wurde im Molverhältnis Al/Ti = 1/12 zugegeben. Rühren für 2 Stunden und Entzug des Lösungsmittels. Erneutes Lösen in Isopropanol und Einbringen in die Matrix (10 Gew.-% TiO₂ bezogen auf die Matrix). Zugabe von 2 Gew.-% Al.sec.-Butylat (auf die flüssige Matrix bezogen). 2 Stunden Rühren und Aushärtung nach Vorschrift (c).
Mit dem Auge war bei Schichtdicken von 5 mm keine Gelbfärbung erkennbar. Gelbwert nach DIN 6167:3.
Brechzahl und Abbe-Zahl wie V7 (siehe unten).

### V7: (Versuch V6 mit photochem. Vorpolymerisation)

Wie V6, jedoch wurde dem flüssigen Edukt zusätzlich 0,1 Gew.-% Photostarter (Irgacure® 184) zugegeben (bezogen auf die Matrix) und nach 15 Minuten Rühren wurde zuerst photochemisch vorpolymerisiert und danach thermisch ausgehärtet (nach Vorschrift (c)).
nₑ = 1,530; Abbe-Zahl = 45.

### BEISPIEL 16

Formkörper mit hochbrechender Matrix und nanoskaligem oberflächenmodifiziertem Titanoxid

### 1. Synthese von oberflächenmodifiziertem TiO₂

### 1.a.

40 g Isopropanol (p.A.) vorlegen; 0,75 g HCl rauchend und 0,74 g bidest. Wasser zugeben und 15 Minuten bis Homogenität rühren. 2,5 g Titanisopropanolat unter Rühren zutropfen; nach 45 Minuten ist die Teilchenbildungsphase abgeschlossen.

### 1.b.

2,5 g MPTS in 100 g Isopropanol (p.A.) lösen und 10 Minuten bis Homogenität rühren. Das Titanoxid-Sol bei 22°C rühren.

### 1.c.

Das MPTS/Isopropanol-Gemisch (1.b) wird innerhalb von 6 Stunden dem Titanoxid-Sol (1.a) zugetropft. Nachdem etwa ein Fünftel der Mischung aus (b) zugetropft ist, wird die Badtemperatur des Sols auf 100°C erhöht.

### 1.d.

Nach 6 Stunden befindet sich oberflächenmodifiziertes Titanoxid mit einer mittleren Teilchengröße von 12 nm in diesem Sol.

### 2. Synthese eines hochbrechenden Formkörpers

112 g des in l.d beschriebenen Sols werden vorgelegt. Nach Zugabe von 1 g bidestilliertem Wasser wird das Sol 1 h bei 100°C gerührt; danach wird das Lösungsmittel entzogen. Das entstehende Pulver wird wieder in 50 g Isopropanol (p.A.) gelöst und es werden 25,77 g TEGDMA, 6,16 g Bis-GMA und 0,65 g sauer vorhydrolysiertes (1,5-stöchiometrisch) MPTS zugetropft. Der Ansatz wird bis zur Homogenität bei 20°C gerührt. Das Lösungsmittel wird entzogen und nach Zugabe von 0,1382 g AIBN wird erneut bis zur Homogenität gerührt. Das flüssige Edukt wird in eine Form (V = 10 ml) gegeben und unter Stickstoffatmosphäre mittels eines Temperaturprogramms thermisch gehärtet (nach Vorschrift (c) von Beispiel 15).
Eigenschaften: transparenter Formkörper mit nₑ = 1,5354 und Abbe-Zahl = 43,8.

## Patentansprüche

1. Verfahren zur Herstellung eines für optische Zwecke geeigneten Formkörpers, umfassend die gemeinsame radikalische Polymerisation eines Vorkondensats (A), das abgeleitet ist von mindestens einem hydrolytisch kondensierbaren Silan (a) mit mindestens einer radikalisch polymerisierbaren Gruppierung X, und eines Monomers (B) mit mindestens zwei radikalisch polymerisierbaren Gruppierungen Y, wobei das Zahlenverhältnis Gruppierungen X : Gruppierungen Y nicht größer als 5:1 und nicht kleiner als 1:20 ist.

2. Verfahren nach Anspruch 1, in welchem die radikalische Polymerisation in der Anwesenheit von nanoskaligen Teilchen (C) einer Metallverbindung, insbesondere eines Metalloxids, in einer Menge von bis zu 50 Gew.-%, bezogen auf (A) + (B) + (C), durchgeführt wird.

3. Verfahren nach irgendeinem der Ansprüche 1 und 2, in welchem die radikalische Polymerisation eine thermische Polymerisation, vorzugsweise in Anwesenheit eines thermischen Polymerisationsinitiators, einschließt.

4. Verfahren nach Anspruch 3, in welchem vor der thermischen Polymerisation eine Photopolymerisation, vorzugsweise mit UV-Strahlung, durchgeführt wird.

5. Verfahren nach irgendeinem der Ansprüche 1 bis 4, in welchem das Silan (a) die allgemeine Formel (I) aufweist:
X-R^{**1**}-SiR^{**2**}_{**3**} (I)
worin X für CH₂=CR³-COO (R³ = H, CH₃) oder CH₂=CH steht, R¹ ein gegebenenfalls Heteroatome enthaltender zweiwertiger Kohlenwasserstoffrest mit 1 bis 20 Kohlenstoffatomen ist und die Reste R², gleich oder verschieden voneinander, aus Alkoxy, Aryloxy, Acyloxy und Alkylcarbonyl und Halogen ausgewählt sind und insbesondere Alkoxy bedeuten.

6. Verfahren nach Anspruch 5, in welchem das Silan (a) ein (Meth) acryloyloxyalkyltrialkoxysilan, insbesondere 3-Methacryloyloxypropyltrimethoxysilan, einschließt.

7. Verfahren nach irgendeinem der Ansprüche 1 bis 6, in welchem das Vorkondensat von bis zu 95 Mol-%, bezogen auf die monomeren Komponenten, mindestens eines hydrolytisch kondensierbaren Silans (b) ohne Gruppierung X abgeleitet ist, vorzugsweise eines Silans der Formel (II)
R⁴ₐSiR² ₍₄₋ₐ₎ (II)
worin
a = 0, 1, 2 oder 3, vorzugsweise 1 oder 2;
R² wie in Anspruch 5 definiert ist; und
die Reste R⁴, gleich oder verschieden voneinander, für Kohlenwasserstoffreste mit 1 bis 20 Kohlenstoffatomen stehen, die gegebenenfalls mit einem oder mehreren Substituenten aus der Gruppe Halogen, Alkoxy, OCOR⁵,
COOR⁵, COR⁵, N(R⁵)₂ (R⁵ = Alkyl mit 1 bis 6 Kohlenstoffatomen oder Phenyl), NO₂, Epoxy und Hydroxy substituiert sind.

8. Verfahren nach irgendeinem der Ansprüche 1 bis 7, in welchem das Monomer (B) aus einer oder mehreren Verbindungen der Formel (III) ausgewählt ist
(CH₂=CR³-COZ-)ₙ-A (III)
worin
n = 2, 3 oder 4, vorzugsweise 2 oder 3;
Z = O oder NH, vorzugsweise O;
R³ = H, CH₃;
A = ein n-wertiger Kohlenwasserstoffrest mit 2 bis 30 Kohlenstoffatomen, der ein oder mehrere Heteroatome zwischen jeweils zwei benachbarten Kohlenstoffatomen enthalten kann und gegebenenfalls einen oder mehrere Substituenten aufweist, die aus Halogen, Alkoxy, Hydroxy, gegebenenfalls substituiertem Amino, NO₂, OCOR⁵, COOR⁵, COR⁵ (R⁵ = C₁₋₆-Alkyl oder Phenyl) ausgewählt sind.

9. Verfahren nach Anspruch 8, in welchem in Formel (III) n = 2, Z = O und A ein von einem aliphatischen Diol, Alkylenglykol, Polyalkylenglykol oder gegebenenfalls alkoxylierten Bisphenol abgeleiteter Rest ist.

10. Verfahren nach irgendeinem der Ansprüche 1 bis 9, in welchem das Monomer (B) ein Monomer mit mindestens einer Vinyl- oder Allylgruppe Y einschließt, insbesondere Allyl(meth)acrylat, Divinylbenzol und/oder Diallylphthalat.

11. Verfahren nach irgendeinem der Ansprüche 1 bis 10, in welchem das Zahlenverhältnis Gruppierungen X : Gruppierungen Y nicht größer als 2:1 und insbesondere nicht größer als 1:1 ist.

12. Verfahren nach irgendeinem der Ansprüche 1 bis 11, in welchem das Zahlenverhältnis Gruppierungen X : Gruppierungen Y nicht kleiner als 1:10 ist.

13. Verfahren nach irgendeinem der Ansprüche 2 bis 12, in welchem die nanoskaligen Teilchen solche von TiO₂ und/ oder ZrO₂ sind.

14. Verfahren nach irgendeinem der Ansprüche 1 bis 13, in welchem der hergestellte Formkörper ein Volumen von mindestens 1 cm³ aufweist.

15. Formkörper, erhältlich gemäß einem Verfahren nach irgendeinem der Ansprüche 1 bis 14.

16. Verwendung des Formkörpers nach Anspruch 15 als optische Komponente, gegebenenfalls nach vorheriger Be- und/oder Verarbeitung.

17. Verwendung nach Anspruch 16, bei der die optische Komponente eine Linse ist.

## Claims

1. Process for preparing a moulding suitable for optical purposes, comprising the conjoint free-radical polymerization of a precondensate (A) which is derived from at least one hydrolytically condensable silane (a) having at least one free-radically polymerizable group X, and of a monomer (B) having at least two free-radically polymerizable groups Y, the numerical ratio of groups X to groups Y being not greater than 5:1 and not smaller than 1:20.

2. Process according to Claim 1, in which the free-radical polymerization is conducted in the presence of nanoscale particles (C) of a metal compound, especially a metal oxide, in an amount of up to 50% by weight, based on (A) + (B) + (C).

3. Process according to either of Claims 1 and 2, in which the free-radical polymerization includes a thermal polymerization, preferably in the presence of a thermal polymerization initiator.

4. Process according to Claim 3, in which prior to the thermal polymerization a photopolymerization is conducted, preferably with UV radiation.

5. Process according to any one of Claims 1 to 4, in which the silane (a) has the general formula (I):
X - R¹ - SiR²₃ (I)
in which X is CH₂=CR³-COO (R³ = H, CH₃) or CH₂=CH, R¹ is an optionally heteroatom-containing divalent hydrocarbon radical having 1 to 20 carbon atoms and the radicals R², identical or different from one another, are selected from alkoxy, aryloxy, acyloxy and alkylcarbonyl and halogen atoms and are, in particular, alkoxy.

6. Process according to Claim 5, in which the silane (a) includes a (meth)acryloyloxyalkyltrialkoxysilane, especially 3-methacryloyloxypropyltrimethoxysilane.

7. Process according to any one of Claims 1 to 6, in which the precondensate is derived from up to 95 mol-%, based on the monomeric components, of at least one hydrolytically condensable silane (b) without a group X, preferably a silane of the formula (II)
R⁴ₐSiR² ₍₄₋ₐ₎ (II)
in which
a = 0, 1, 2 or 3, preferably 1 or 2;
R² is as defined in Claim 5; and
the radicals R⁴, identical or different from one another, are hydrocarbon radicals having 1 to 20 carbon atoms which are unsubstituted or substituted by one or more substituents from the group consisting of halogen, alkoxy, OCOR⁵, COOR⁵, COR⁵, N(R⁵)₂ (R⁵ = alkyl having 1 to 6 carbon atoms or phenyl), NO₂, epoxy and hydroxyl.

8. Process according to any one of Claims 1 to 7, in which the monomer (B) is selected from one or more compounds of the formula (III)
(CH₂=CR³-COZ-)ₙ-A (III)
in which
n = 2, 3 or 4, preferably 2 or 3;
Z = O or NH, preferably O;
R³ = H, CH₃;
A = an n-valent hydrocarbon radical having 2 to 30 carbon atoms, which can contain one or more heteroatoms between in each case two adjacent carbon atoms and which optionally has one or more substituents which are selected from halogen, alkoxy, hydroxyl, unsubstituted or substituted amino, NO₂, OCOR⁵, COOR⁵, COR⁵ (R⁵ = C₁-C₆-alkyl or phenyl).

9. Process according to Claim 8, in which in formula (III) n = 2, Z = O and A is a radical derived from an aliphatic diol, alkylene glycol, polyalkylene glycol or optionally alkoxylated bisphenol.

10. Process according to any one of Claims 1 to 9, in which the monomer (B) includes a monomer having at least one vinyl or allyl group Y, especially allyl (meth)acrylate, divinylbenzene and/or diallyl phthalate.

11. Process according to any one of Claims 1 to 10, in which the numerical ratio of groups X to groups Y is not greater than 2:1 and, in particular, not greater than 1:1.

12. Process according to any one of Claims 1 to 11, in which the numerical ratio of groups X to groups Y is not smaller than 1:10.

13. Process according to any one of Claims 2 to 12, in which the nanoscale particles are those of TiO₂ and/or ZrO₂.

14. Process according to any one of Claims 1 to 13, in which the moulding prepared has a volume of at least 1 cm³.

15. Moulding obtainable in accordance with a process according to any one of Claims 1 to 14.

16. Use of the moulding according to Claim 15 as optical component, optionally after machining and/or processing beforehand.

17. Use according to Claim 16, where the optical component is a lens.

## Revendications

1. Procédé pour la fabrication d'un article moulé utilisable en optique, comprenant la polymérisation radicalaire conjointe d'un précondensat (A) dérivé d'au moins un silane (a) susceptible d'être condensé par hydrolyse et comportant au moins un groupe X polymérisable par voie radicalaire, et d'un monomère (B) comportant au moins deux groupes Y polymérisables par voie radicalaire, le rapport du nombre de groupes X au nombre de groupes Y n'étant pas supérieur à 5/1 et pas inférieur à 1/20.

2. Procédé selon la revendication 1, dans lequel la polymérisation radicalaire est mise en oeuvre en présence de nanoparticules (C) d'un composé métallique, en particulier d'un oxyde métallique, lesquelles particules sont présentes en une quantité pouvant aller jusqu'à 50 % en poids rapporté à la somme de (A), (B) et (C).

3. Procédé selon l'une quelconque des revendications 1 et 2, dans lequel la polymérisation radicalaire comprend une polymérisation thermique, de préférence en présence d'un amorceur de polymérisation thermique.

4. Procédé selon la revendication 3, dans lequel on met en oeuvre, avant la polymérisation thermique, une photopolymérisation, de préférence amorcée par un rayonnement UV.

5. Procédé selon l'une quelconque des revendications 1 à 4, dans lequel le silane (a) correspond à la formule générale suivante (I) :
X-R¹-SiR² ₃ (I)
dans laquelle X représente un groupe CH₂=CR³-COO (R³ = H, CH₃) ou CH₂=CH, R¹ représente un résidu hydrocarboné divalent en C₁₋₂₀ pouvant contenir des hétéroatomes, et les résidus R², identiques ou différents, représentent chacun un groupe alcoxy, aryloxy, acyloxy ou alkylcarbonyle ou un atome d'halogène, et en particulier un groupe alcoxy.

6. Procédé selon la revendication 5, dans lequel le silane (a) englobe un (méth)acryloyloxyalkyltrialcoxysilane, en particulier un 3-méthacryloyloxypropyltriméthoxysilane.

7. Procédé selon l'une quelconque des revendications 1 à 6, dans lequel le précondensat est dérivé de jusqu'à 95 % en moles, rapporté aux composants monomères, d'au moins un silane (b) susceptible d'être condensé par hydrolyse, exempt de groupes X, de préférence un silane de formule (II)
R⁴ ₐSiR² ₍₄₋ₐ) (II)
dans laquelle
a = 0, 1, 2 ou 3, de préférence 1 ou 2,
R² a la signification indiquée dans la revendication 5, et
les résidus R⁴, identiques ou différents, représentent chacun un résidu hydrocarboné comportant de 1 à 20 atomes de carbone, et pouvant porter un ou plusieurs substituants choisis parmi les atomes d'halogène, les groupes alcoxy, OCOR⁵, COOR⁵, COR⁵, N(R⁵)₂, (R⁵ = alkyle en C₁₋₆ ou phényle), NO₂, époxy et hydroxy.

8. Procédé selon l'une'quelconque des revendications 1 à 7, dans lequel le monomère (B) est choisi parmi un ou plusieurs composés de formule (III)
(CH₂=CR³-COZ-)ₙ-A (III)
dans laquelle
n = 2, 3 ou 4, de préférence 2 ou 3,
Z = O ou NH, de préférence O,
R³ = H, CH₃,
A = un résidu hydrocarboné n-valent comportant de 2 à 30 atomes de carbone, et pouvant contenir un ou plusieurs hétéroatomes insérés entre deux atomes de carbone voisins et portant éventuellement un ou plusieurs substituants choisis parmi les atomes d'halogène et les groupes alcoxy, hydroxy, amino éventuellement substitué, NO₂, OCOR⁵, COR⁵, (R⁵ = alkyle en C₁₋₆ ou phényle).

9. Procédé selon la revendication 8, dans lequel, dans la formule (III), n = 2, Z représente un atome d'oxygène et A représente un résidu dérivé d'un diol aliphatique, alkylèneglycol, polyalkylèneglycol ou bis-phénol éventuellement alcoxylé.

10. Procédé selon l'une quelconque des revendications 1 à 9,
dans lequel le monomère (B) comprend un monomère portant au moins un groupe vinyle ou allyle Y, en particulier le (méth)acrylate d'allyle, le divinylbenzène et/ou le phtalate de diallyle.

11. Procédé selon l'une quelconque des revendications 1 à 10,
dans lequel le rapport du nombre de groupes X au nombre de groupes Y ne dépasse pas 2/1 et en particulier pas 1/1.

12. Procédé selon l'une quelconque des revendications 1 à 11,
dans lequel le rapport du nombre de groupes X au nombre de groupes Y n'est pas inférieur à 1/10.

13. Procédé selon l'une quelconque des revendications 2 à 12,
dans lequel les nanoparticules sont en TiO₂ et/ou en ZrO₂.

14. Procédé selon l'une quelconque des revendications 1 à 13,
dans lequel l'article moulé a un volume d'au moins 1 cm³.

15. Article moulé susceptible d'être obtenu par un procédé selon l'une des revendications 1 à 14.

16. Utilisation d'un article moulé selon la revendication 15, en tant que composant optique, éventuellement après l'avoir soumis à un façonnage ou un traitement.

17. Utilisation selon la revendication 16, dans lequel le composant optique est une lentille.
